# EUROPEAN PATENT SPECIFICATION

(11) **EP 3 409 410 B1**
(45) Date of publication and mention of the grant of the patent: **05.01.2022**
(21) Application number: 17744416.3
(22) Date of filing: 27.01.2017
(51) Int. Cl.: B23K 31/00, B23K 9/02, B23K 15/00, B23K 26/21, B23K 9/025, C21D 9/50, B23K 26/354, B23K 26/244

(54) **METHOD FOR IMPROVING FATIGUE STRENGTH OF LAP-WELDED JOINT, LAP-WELDED JOINT MANUFACTURING METHOD, AND LAP-WELDED JOINT**
VERFAHREN ZUR VERBESSERUNG DER DAUERFESTIGKEIT EINER ÜBERLAPPENDEN SCHWEISSVERBINDUNG, HERSTELLUNGSVERFAHREN FÜR ÜBERLAPPENDE SCHWEISSVERBINDUNG UND ÜBERLAPPENDE SCHWEISSVERBINDUNG
PROCÉDÉ D'AMÉLIORATION DE LA RÉSISTANCE À LA FATIGUE DE JOINT SOUDÉ PAR RECOUVREMENT, PROCÉDÉ DE FABRICATION DE JOINT SOUDÉ PAR RECOUVREMENT, ET JOINT SOUDÉ PAR RECOUVREMENT

(30) Priority: 28.01.2016 JP 2016014694; 20.09.2016 JP 2016182613
(43) Date of publication of application: 05.12.2018
(73) Proprietor: Nippon Steel Corporation, Tokyo 100-8071 (JP)
(72) Inventor: KIKUCHI, Shota, Tokyo 100-8071 (JP); FUKUMOTO, Manabu, Tokyo 100-8071 (JP)
(74) Representative: J A Kemp LLP
(86) International application number: PCT/JP2017/003027
(87) International publication number: WO 2017/131186

(56) References cited:
- EP-A1- 2 492 042
- WO-A1-2012/114532
- WO-A1-2013/098965
- WO-A1-2019/124871
- CN-A- 104 625 455
- DE-A1-102013 001 213
- JP-A- H10 193 164
- JP-A- S60 165 323
- JP-A- 2003 154 481
- JP-A- 2014 004 609
- JP-A- 2014 004 609
- JP-U- S5 314 918

## Description

### TECHNICAL FIELD

The present invention relates to a method for improving the fatigue strength of a lap-welded joint, and a lap-welded joint manufacturing method.

### BACKGROUND ART

A lap-welded joint, which is made of more than one overlapping steel sheet welded together, has been used for constituting members of an automobile body and the like. In addition, for the purpose of weight reduction and improvement of crash safety, various types of steel sheet have been used for constituting members of a vehicle body.

Now, the fatigue strength of a base metal of a lap-welded joint increases in proportion to the strengths of steel sheets constituting the weld joint. In contrast, it is known that the fatigue strength of the lap-welded joint itself hardly increases with increase in the strengths of the steel sheets constituting the weld joint. Hence, various studies for the improvement of the fatigue strength of a lap-welded joint have been conducted.

For example, JP10-193164A (Patent Document 1) discloses a method for improving the fatigue properties of a lap-welded joint. Patent Document 1 discloses the method in which a lower-side steel sheet constituting the weld joint is heated at a position in the vicinity of a weld zone, in parallel to the weld zone, to the extent that the steel sheet is not melted. Patent Document 1 discloses that heating the lower-side steel sheet as described above reduces the tensile residual stress of a vicinity of a weld toe portion, so as to improve the fatigue properties of the weld joint.

### LIST OF PRIOR ART DOCUMENTS

### PATENT DOCUMENT

Patent Document 1: JP10-193164A JP 2014-004609 discloses a method for improving a fatigue strength of a lap-welded joint. DE102013001213 shows a method according to the preamble of claims 1 and 7.

### SUMMARY OF INVENTION

### TECHNICAL PROBLEM

However, as a result of studies conducted by the present inventors, it was found that even heating a lower-side steel sheet of a lap-welded joint as described above fails in some cases to reduce the tensile residual stress in the weld joint sufficiently. This case fails to sufficiently improve the fatigue strength of the weld joint.

An objective of the present invention, which has been made to solve the above problem, is to provide a method for improving the fatigue strength of a lap-welded joint sufficiently, and a manufacturing method for a lap-welded joint having an excellent fatigue strength.

### SOLUTION TO PROBLEM

To solve the above problem, the present inventors conducted studies, and as a result, it was found that a tensile residual stress in a weld joint can be further reduced by heating a lower-side steel sheet at a position where the lower-side steel sheet is heated in the method of Patent Document 1, until the lower-side steel sheet is melted. However, in this case, it was found that the fatigue strength of the lower-side steel sheet itself deteriorated, failing to improve the fatigue strength of the weld joint.

Hence, the present inventors conducted further studies, and it was found that the fatigue strength of a weld joint can be improved by heating part of the portion in the weld joint where two steel sheets overlap with each other.

The present invention has been made based on the above findings, and the present invention is defined in the claims. The following method for improving the fatigue strength of a lap-welded joint as in claim 1, and lap-welded joint manufacturing method as in claim 7 is disclosed.
(1) A method for improving a fatigue strength of a lap-welded joint in which a portion of a first steel material having a predetermined thickness and a portion of a second steel material having a predetermined thickness overlap with each other as overlapping portions, and an edge portion of the first steel material is welded to a front face of the second steel material with a weld zone extending along the edge portion, wherein
   when a direction perpendicular to an extending direction of the weld zone and parallel to the front face of the second steel material is defined as a reference direction, and while the lap-welded joint is restrained from moving in the reference direction, the first steel material is restrained from moving in a thickness direction of the first steel material, and the second steel material is restrained from moving in a thickness direction of the second steel material, a sub-portion of the overlapping portion of the second steel material is heated such that a melted portion is formed in the sub-portion of the overlapping portion of the second steel material, when forming the melted portion the first steel material is restrained from moving in the reference direction at an end face of the first steel material opposite to the second steel material and the second steel material is restrained from moving in the reference direction at an end face of the second steel material opposite to the first steel material.
(2) The method for improving a fatigue strength of a lap-welded joint according to the above (1), wherein a sub-portion of the overlapping portion of the first steel material and a sub-portion of the overlapping portion of the second steel material are heated such that the melted portion is formed in the sub-portion of the overlapping portion of the first steel material and the sub-portion of the overlapping portion of the second steel material.
(3) The method for improving a fatigue strength of a lap-welded joint according to the above (1) or (2), wherein the melted portion is formed to extend in parallel to the weld zone extending along the edge portion of the first steel material.
(4) The method for improving a fatigue strength of a lap-welded joint according to any one of the above (1) to (3), wherein a position heated in the overlapping portion of the second steel material is at a distance of 2 mm or longer to 10 mm or shorter in the reference direction from the weld zone extending along the edge portion.
(5) The method for improving a fatigue strength of a lap-welded joint according to any one of the above (1) to (4), wherein the sub-portion of the overlapping portion of the second steel material is heated by a laser beam, tungsten inert gas, or an electron beam.
(6) The method for improving a fatigue strength of a lap-welded joint according to any one of the above (1) to (5), wherein the melted portion is formed at a position that is at a distance from the weld zone in the reference direction.
(7) A manufacturing method for a lap-welded joint including a welding step of welding a first steel material and a second steel material together to obtain a joined body, and a heating step of heating the joined body, wherein
   the welding step includes a step of, in a state where a portion of the first steel material and a portion of the second steel material overlap with each other as overlapping portions, welding an edge portion of the first steel material and a front face of the second steel material together such that a weld zone is formed along the edge portion, and
   when a direction perpendicular to an extending direction of the weld zone and parallel to the front face of the second steel material is defined as a reference direction, the heating step includes a step of, while the joined body is restrained from moving in the reference direction, the first steel material is restrained from moving in a thickness direction of the first steel material, and the second steel material is restrained from moving in a thickness direction of the second steel material, heating a sub-portion of the overlapping portion of the second steel material such that a melted portion is formed in the sub-portion of the overlapping portion of the second steel material, when forming the melted portion the first steel material is restrained from moving in the reference direction at an end face of the first steel material opposite to the second steel material and the second steel material is restrained from moving in the reference direction at an end face of the second steel material opposite to the first steel material.
(8) The manufacturing method for a lap-welded joint according to the above (7), wherein the heating step includes a step of heating a sub-portion of the overlapping portion of the first steel material and a sub-portion of the overlapping portion of the second steel material such that the melted portion is formed in the sub-portion of the overlapping portion of the first steel material and the sub-portion of the overlapping portion of the second steel material.
(9) The manufacturing method for a lap-welded joint according to the above (7) or (8), wherein, in the heating step, the melted portion is formed to extend in parallel to the weld zone extending along the edge portion of the first steel material.
(10) The manufacturing method for a lap-welded joint according to any one of the above (7) to (9), wherein a position heated in the overlapping portion of the second steel material in the heating step is at a distance of 2 mm or longer to 10 mm or shorter in the reference direction from the weld zone extending along the edge portion.
(11) The manufacturing method for a lap-welded joint according to any one of the above (7) to (10), wherein, in the heating step, the sub-portion of the overlapping portion of the second steel material is heated by a laser beam, tungsten inert gas, or an electron beam.
(12) The manufacturing method for a lap-welded joint according to any one of the above (7) to (10), wherein, in the heating step, the melted portion is formed at a position that is at a distance from the weld zone in the reference direction.

### ADVANTAGEOUS EFFECTS OF INVENTION

According to the present invention, it is possible to improve the fatigue strength of a lap-welded joint sufficiently.

### BRIEF DESCRIPTION OF DRAWINGS

[Figure 1] Figure 1 is a perspective view illustrating a weld joint made according to an embodiment of the present invention.
[Figure 2] Figure 2 is a side view illustrating a lap-welded joint.
[Figure 3] Figure 3 is a diagram for illustration of a method for improving fatigue strength according to an embodiment of the present invention. Figure 3(a) is a diagram illustrating a weld joint before subjected to the improvement of its fatigue strength, Figure 3(b) is a diagram illustrating the weld joint being heated, and Figure 3(c) is a diagram illustrating the weld joint released from a restrained state.

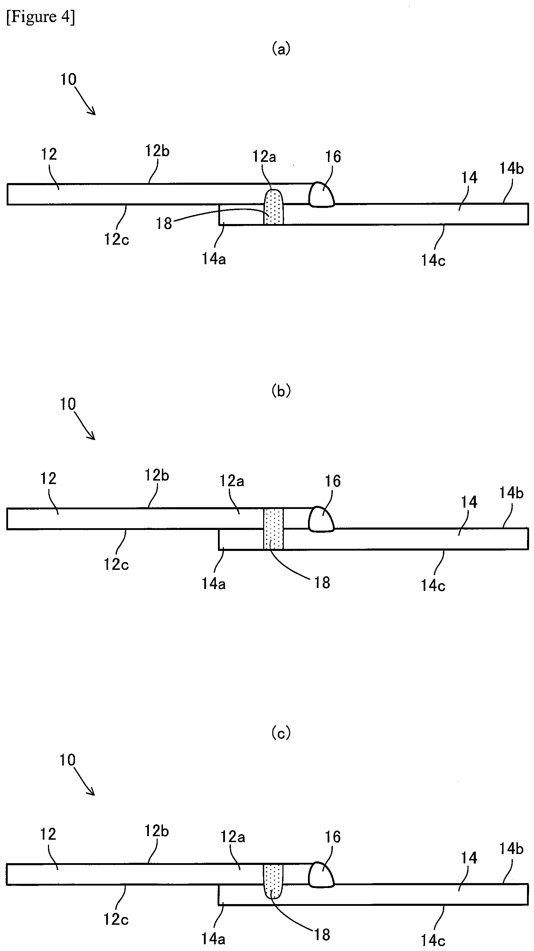

[Figure 4] Figure 4 is a diagram for illustration of another example of the method for improving fatigue strength. Figure 4(a) is a diagram illustrating a weld joint that is formed such that a melted portion extends from a back face of a second steel material toward a first steel material and does not reach a front face of the first steel material, Figure 4(b) is a diagram illustrating a weld joint that is formed such that the melted portion runs through the first steel material and the second steel material, and Figure 4(c) is a diagram illustrating a weld joint that is formed such that the melted portion extends from the front face of the first steel material toward the second steel material and does not reach the back face of the second steel material.
[Figure 5] Figure 5 is a diagram for illustration of another example of the weld joint. Figure 5(a) is a perspective view illustrating another example of the weld joint, and Figure 5(b) is an exploded perspective view illustrating the other example of the weld joint.
[Figure 6] Figure 6 is a diagram for illustration of still another example of the weld joint. Figure 6(a) is a longitudinal sectional view illustrating the weld joint, and Figure 6(b) is a cross-sectional view taken along a B-B line of Figure 6(a).
[Figure 7] Figure 7 is a diagram illustrating finite element (FE) models. Figure 7(a) is a diagram illustrating an FE model for a weld joint made according to the present invention, Figure 7(b) is a diagram illustrating an FE model for a weld joint according to a comparative example, and Figure 7(c) is a diagram illustrating an FE model for a weld joint according to another comparative example.
[Figure 8] Figure 8 is a graph illustrating residual stresses on the front face of the second steel material (analysis results).
[Figure 9] Figure 9 is a graph illustrating residual stresses in a sheet-thickness center of the second steel material (analysis results).
[Figure 10] Figure 10 is a graph illustrating values obtained by subtracting the residual stresses in the sheet-thickness center from the residual stresses on the front face of the second steel material.
[Figure 11] Figure 11 is a diagram for illustration of a method of applying a bending moment to an analysis model.
[Figure 12] Figure 12 is a graph illustrating stress distributions on the front face of the second steel material when the bending moment is applied to the analysis models.
[Figure 13] Figure 13 is a graph illustrating changes in stress before and after the application of the bending moment.
[Figure 14] Figure 14 is a diagram for illustration of another example of the analysis model. Figure 14(a) is a diagram illustrating an analysis model in which the melted portion does not reach the back face of the second steel material, and Figure 14(b) is a diagram illustrating an analysis model in which the melted portion does not reach the front face of the first steel material.
[Figure 15] Figure 15 is a graph illustrating residual stresses on the front face of the second steel material.
[Figure 16] Figure 16 is a perspective view illustrating a weld joint according to Examples.
[Figure 17] Figure 17 is a diagram illustrating a fatigue test specimen. Figure 17(a) is a plan view of the fatigue test specimen, and Figure 17(b) is a cross-sectional view taken along a b-b line of Figure 17(a).
[Figure 18] Figure 18 is a graph illustrating the results of a bending fatigue test.

### DESCRIPTION OF EMBODIMENTS

Hereafter, description will be made to a method for improving the fatigue strength of a lap-welded joint according to an embodiment of the present invention (hereafter, also simply referred to as an improving method), a lap-welded joint manufacturing method, and a lap-welded joint.

### <Configuration of Lap-Welded Joint>

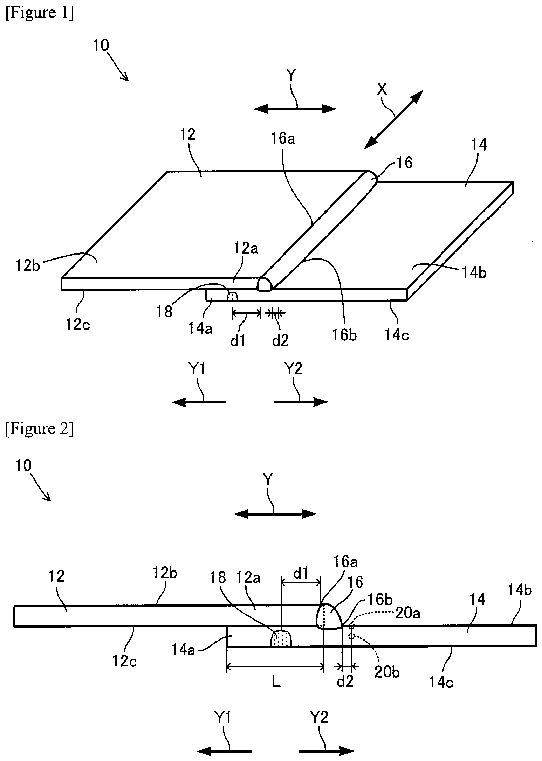

First, the lap-welded joint (hereafter, also simply referred to as a weld joint) will be described. Figure 1 is a perspective view illustrating a weld joint 10, and Figure 2 is a side view illustrating the lap-welded joint 10. Note that the weld joint 10 illustrated in Figure 1 is a weld joint 10 of which fatigue strength is improved by the improving method to be described later.

With reference to Figure 1 and Figure 2, the weld joint 10 includes a first steel material 12 having a predetermined thickness, a second steel material 14 having a predetermined thickness, and a weld zone 16. In the present embodiment, steel sheets are used as the first steel material 12 and the second steel material 14. The thickness of the first steel material 12 and the thickness of the second steel material 14 may be either equal to each other or different from each other. As the first steel material 12, a steel material having a thickness of 3.3 mm or smaller can be used. Similarly, as the second steel material 14, a steel material having a thickness of 3.3 mm or smaller can be used. In the present embodiment, an edge portion of the first steel material 12 is welded to a front face 14b of the second steel material 14, with a portion 12a of the first steel material 12 and a portion 14a of the second steel material 14 overlapping with each other as overlapping portions. In the following description, the portion 12a of the first steel material 12 will be referred to as an overlapping portion 12a, and the portion 14a of the second steel material 14 will be referred to as an overlapping portion 14a. The first steel material 12 and the second steel material 14 are welded to each other by, for example, gas welding, arc welding, electron beam welding, laser beam welding, or the like. In the present embodiment, the weld zone 16 is, for example, a weld bead extending along the edge portion of the first steel material 12 and connects the above edge portion to the second steel material 14.

Note that, in Figure 1, the extending direction of the weld zone 16 is illustrated as an arrow X. In addition, in Figure 1 and Figure 2, a direction that is perpendicular to the extending direction X of the weld zone 16 and parallel to the front face 14b of the second steel material 14 is illustrated as an arrow Y. Hereafter, the direction illustrated by the arrow Y will be referred to as a reference direction. In the present embodiment, the reference direction Y includes a first direction Y1 pointing toward a first steel material 12 side with respect to the weld zone 16 and a second direction Y2 pointing toward an opposite side with respect to the weld zone 16 to the first steel material 12.

Referring to Figure 1 and Figure 2, on a front face 12b of the first steel material 12, a weld toe 16a of the weld zone 16 is formed. In addition, also on the front face 14b of the second steel material 14, a weld toe 16b of the weld zone 16 is formed.

In a portion of the overlapping portion 14a of the second steel material 14, a melted portion 18 is formed. The melted portion 18 is formed at a distance from the weld zone 16 in the reference direction Y (the first direction Y1 in the present embodiment). In the present embodiment, the melted portion 18 is formed at a distance d1 from the weld toe 16a in the first direction Y1. In the present embodiment, when the weld joint 10 is viewed from below, the melted portion 18 is formed to extend in parallel to the weld zone 16. The length of the melted portion 18 in the extending direction X is preferably 0.5 times or longer the width of the second steel material 14, more preferably 0.8 times or longer the width of the second steel material 14, still more preferably over the entire width of the second steel material 14. Note that, in the present embodiment, the width of the second steel material 14 means the length of the overlapping portion 14a in the extending direction X. In the present embodiment, when the weld joint 10 is viewed laterally, the melted portion 18 is formed to extend from a back face 14c toward the front face 14b, of the second steel material 14 (from the back face 14c toward a back face 12c of the first steel material 12). Note that the distance d1 refers to a distance between the center of the melted portion 18 and the weld toe 16a, in the reference direction Y (the first direction Y1). The distance d1 is set at, for example, 1 (mm) or longer. Moreover, referring to Figure 2, in the reference direction Y, letting L (mm) denote the length the portion where the first steel material 12 and the second steel material 14 overlap with each other, the distance d1 may be set at, for example, a value within a range from 0.2 × L (mm) to 0.8 × L (mm) or a value within a range from 0.3 × L (mm) to 0.6 × L (mm). The distance d1 is, for example, set at 2 mm or longer to 10 mm or shorter, preferably set at 8 mm or shorter, and more preferably set at 6 mm or shorter. The length L is, for example, set at 10 mm or longer, preferably set at 40 mm or longer. How to form the melted portion 18 will be described later.

The weld joint 10 according to the present embodiment is in the following stress state at a distance d2 from the weld toe 16b in the second direction Y2. Referring to Figure 2, a residual stress at a position 20a that is on the front face 14b of the second steel material 14 and at the distance d2 from the weld toe 16b in the second direction Y2 has a value that is more compressive than that of a residual stress at a position 20b that is at the center of the second steel material 14 in a thickness direction (in the present embodiment, the center of a sheet thickness of the second steel material 14) and at the distance d2 from the weld toe 16b in the second direction Y2. The distance d2 is, for example, 0.5 mm. In the present embodiment, the above residual stress means a residual stress in the reference direction Y (the first direction Y1 and the second direction Y2).

Note that the residual stresses at the position 20a having a value more compressive than that of the residual stress at the position 20b is not limited to a case where a residual stress at the position 20a is compressive, and a residual stress at the position 20b is tensile. For example, a case where residual stresses at both of the position 20a and the position 20b are compressive, and the compressive residual stress at the position 20a is larger than the compressive residual stress at the position 20b also satisfies a condition that the residual stress at the position 20a has the value being more compressive than the residual stress at the position 20b. In addition, for example, a case where residual stresses at both of the position 20a and the position 20b are tensile, and the tensile residual stress at the position 20a is smaller than the tensile residual stress at the position 20b also satisfies the above condition. Note that the residual stress in the weld joint 10 is measured by an X-ray diffraction method.

### <Description of Method for Improving Fatigue Strength>

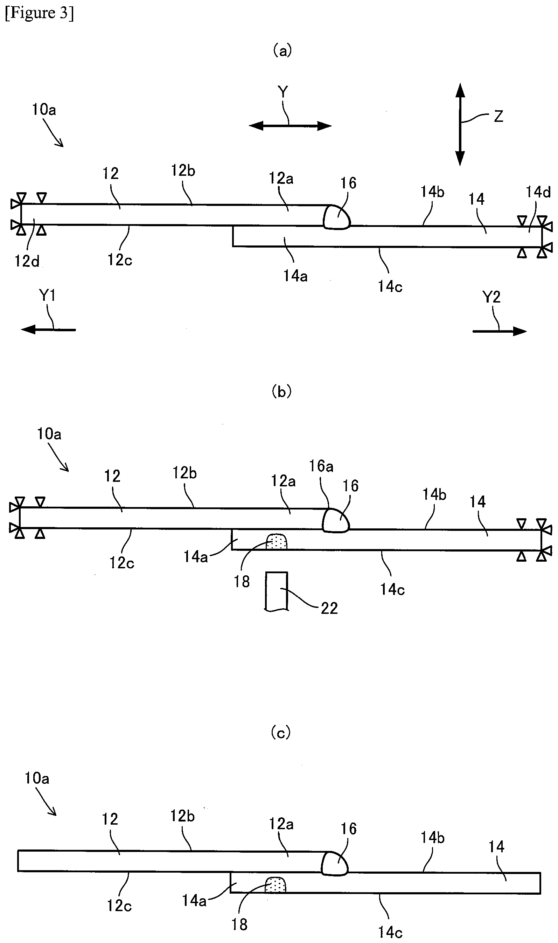

Description will be made below to a method for improving fatigue strength according to an embodiment of the present invention. Figure 3 is a diagram for illustration of the method for improving according to the present embodiment. Note that triangular marks illustrated in Figures 3(a) and 3(b) illustrate portions where the first steel material 12 and the second steel material 14 are restrained from moving. In addition, a weld joint 10a illustrated in Figure 3(a) is equivalent to the weld joint 10 having a fatigue strength before improved.

Referring to Figure 3(a), in the present embodiment, the first steel material 12 and the second steel material 14 are first held by a holding member not illustrated such that the weld joint 10a is restrained from moving in the reference direction Y and a thickness direction (that is a sheet-thickness direction, a direction illustrated by an arrow Z, in the present embodiment). In the present embodiment, one end portion 12d of the first steel material 12 is held such that the first steel material 12 is restrained from moving in the first direction Y1 and in the thickness direction of the first steel material 12 (hereafter, written as a sheet-thickness direction). In addition, one end portion 14d of the second steel material 14 is held such that the second steel material 14 is restrained from moving in the second direction Y2 and in the thickness direction of the second steel material 14 (hereafter, written as a sheet-thickness direction).

Note that, in the present embodiment, at least a part of the first steel material 12 may need only to be restrained from moving in its sheet-thickness direction, and it is not necessary to restrain the entire first steel material 12 from moving in its sheet-thickness direction. In addition, at least a part of the second steel material 14 may need only to be restrained from moving in its sheet-thickness direction, and it is not necessary to restrain the entire second steel material 14 from moving in its sheet-thickness direction. For example, the first steel material 12 may be restrained from moving in its sheet-thickness direction only in an end face 12e (an end on a first direction Y1 side of the first steel material 12). In addition, for example, the first steel material 12 may be restrained from moving in its sheet-thickness direction only in one of the front face 12b and the back face 12c. In addition, for example, the second steel material 14 may be restrained from moving in its sheet-thickness direction only in an end face 14e (an end on a second direction Y2 side of the second steel material 14). In addition, for example, the second steel material 14 may be restrained from moving in its sheet-thickness direction only in one of the front face 14b and the back face 14c.

In addition, the portions where the first steel material 12 and the second steel material 14 are held are not limited to the example described above. For example, in the reference direction Y, any portion of the first steel material 12 on an opposite side to the weld zone 16 with respect to the overlapping portion 12a may be held by the above holding member. In other words, any portion of the first steel material 12 between the overlapping portion 12a and the one end portion 12d may be held. In this case, for example, the first steel material 12 may be held such that the above any portion of the first steel material 12 is restrained from moving in the first direction Y1 and from moving in its sheet-thickness direction. In addition, for example, in the reference direction Y, any portion of the second steel material 14 on an opposite side to the overlapping portion 14a with respect to the weld zone 16 may be held by the above holding member. In other words, any portion of the second steel material 14 between the weld zone 16 and the one end portion 14d may be held. In this case, for example, the second steel material 14 may be held such that the above any portion of the second steel material 14 is restrained from moving in the second direction Y2 and from moving in its sheet-thickness direction.

Next, with reference to Figure 3(b), in a state where the movement of the weld joint 10a is restrained as described above (hereafter, referred to as a restrained state), a part of the overlapping portion 14a of the second steel material 14 is heated to be formed into the melted portion 18 described above. In the present embodiment, for example, a heating device 22 is used to heat the back face 14c of the second steel material 14, so as to form the melted portion 18 in the second steel material 14. In the present embodiment, a position of heating the overlapping portion 14a of the second steel material 14 is, for example, at a distance of 0.2 × L (see Figure 2) to 0.8 × L from the weld zone 16 in the reference direction Y. Specifically, the above position of heating is, for example, at a distance of 2 mm or longer to 10 mm or shorter from the weld zone 16 in the reference direction Y. In the present embodiment, a distance between the above position of heating and the weld zone 16 in the reference direction Y is represented in the form of a distance between the center of the heating and the weld toe 16a in the reference direction. Note that the melted portion 18 can be formed by, for example, a laser beam, tungsten inert gas, an electron beam, or the like. The length of the melted portion 18 in the reference direction Y is, for example, 1 to 2 mm. As to the temperature of the heating, the temperature higher than the fusing point of a steel material may suffice. In the present embodiment, since the melted portion 18 is formed in the second steel material 14, the temperature of the heating is set at a temperature higher than the fusing point of the second steel material 14. Note that, as illustrated in Figure 4 to be described later, in a case where the melted portion 18 is formed in the first steel material 12 and the second steel material 14, the temperature of the heating is set at a temperature higher than the fusing point of the first steel material 12 and the fusing point of the second steel material 14. For example, in a case where SUS316L is used as a steel material, the temperature of the heating is 1400°C or higher.

In the present embodiment, after the melted portion 18 is formed as described above, for example, the weld joint 10a is cooled with the restrained state of the weld joint 10a maintained. Specifically, the restrained state of the weld joint 10a is maintained until, for example, the temperature of the melted portion 18 falls to or below 200°C, preferably to or below 100°C, more preferably to normal temperature.

Next, referring to Figure 3(c), the weld joint 10a is released from its restrained state. In other words, the restraint of the movement of the weld joint 10a in the reference direction Y and the sheet-thickness direction is removed. As a result, referring to Figure 2, the weld joint 10 in which a residual stress at the position 20a has a value more compressive than a residual stress at the position 20b is obtained.

Note that, in the present embodiment, the restraint of the movement of the weld joint 10a means not only completely restraining the weld joint 10a from moving. For example, a state where the movement of the weld joint 10a in the reference direction Y is restrained means a state where, in the reference direction Y, the relative position relationship between any portion of the first steel material 12 held by the above holding member and any portion of the second steel material 14 held by the above holding member is maintained. Therefore, as long as the above relative position relationship is maintained, the above any portion of the first steel material 12 and the above any portion of the second steel material 14 may be moved simultaneously in the reference direction Y. Similarly, a state where the movement of the weld joint 10a in the sheet-thickness direction is restrained means a state where, in the sheet-thickness direction, the relative position relationship between any portion of the first steel material 12 held by the above holding member and any portion of the second steel material 14 held by the above holding member is maintained.

### <Advantageous Effects of Present Embodiment>

In the weld joint 10 where melted portion 18 is formed, it is possible to prevent a large tensile residual stress from occurring in the vicinity of the weld toe 16b on the front face 14b of the second steel material 14. In the present embodiment, as described above, the residual stress at the position 20a has a value more compressive than that of the residual stress at the position 20b. It is thereby possible to inhibit a large tensile stress in the reference direction Y from occurring in the vicinity of the weld toe 16b on the front face 14b even when, for example, a force in the reference direction Y acts on the vicinity of the weld toe 16b in the second steel material 14. As a result, in comparison with a conventional weld joint, a crack or the like can be inhibited from occurring in the vicinity of the weld toe 16b on a front face 14b side of the second steel material 14. In other words, it is possible to obtain the weld joint 10 having an excellent fatigue strength. Note that, to obtain the weld joint 10 having a more excellent fatigue strength, the residual stress at the position 20a preferably has a value more compressive than that of the residual stress at the position 20b by 150 MPa or higher, more preferably has a value more compressive by 200 MPa or higher.

In addition, in the weld joint 10 according to the present embodiment, the residual stress at the position 20a can be made to have a value more compressive as described above by forming the melted portion 18 in a part of the overlapping portion 14a of the second steel material 14. Here, in a case where the first steel material 12 is pulled in the first direction Y1 and the second steel material 14 is pulled in the second direction Y2, a tensile stress in the reference direction Y occurs in the first steel material 12, and a tensile stress in the reference direction Y occurs in the second steel material 14 at a portion on a second direction Y2 side of the weld zone 16. Meanwhile, in the second steel material 14, a portion on a first direction Y1 side of the weld zone 16, namely, the overlapping portion 14a of the second steel material 14 hardly undergoes a tensile stress. As a result, forming the melted portion 18 in a part of the overlapping portion 14a of the second steel material 14 can prevent the tensile strength of the weld joint 10 from being lowered even if the strength of the overlapping portion 14a is lowered. In other words, according to the present embodiment, it is possible to bring the residual stress at the position 20a, as described above, to a value being more compressive without lowering the tensile strength of the weld joint 10.

### <Description of Manufacturing Method for Weld Joint>

In the above embodiment, although the description has been made to how the weld joint 10 having an improved fatigue strength is obtained by heating an existing weld joint 10a, the weld joint 10 may be obtained using the first steel material 12 and the second steel material 14. In this case, by welding the first steel material 12 and the second steel material 14 together first, a joined body having the same configuration as that of the weld joint 10a illustrated in Figure 3(a) is obtained (welding step). Specifically, in the welding step, with the overlapping portion 12a of the first steel material 12 and the overlapping portion 14a of the second steel material 14 made to overlap with each other, an edge portion of the first steel material 12 and the front face 14b of the second steel material 14 are welded together such that the weld zone 16 is formed along the above edge portion. Thereafter, the joined body obtained by the welding step is subjected to a heating step (a step equivalent to the above improving method), and the weld joint 10 can be obtained.

### <Modifications>

In the above embodiment, the description has been made to the case where the melted portion 18 is formed only in the overlapping portion 14a of the second steel material 14. However, a region where the melted portion 18 is formed is not limited to the above example. For example, as illustrated in Figures 4(a) to 4(c), the melted portion 18 may be formed from a part of the overlapping portion 12a of the first steel material 12 to a part of the overlapping portion 14a of the second steel material 14. In this case, since the overlapping portion 12a of the first steel material 12 and the overlapping portion 14a of the second steel material 14 are welded together, the weld joint 10 can be prevented from being lowered in strength in the overlapping portion 12a and the overlapping portion 14a even with the formation of the melted portion 18. Note that, in this case, the melted portion 18 is formed to extend in parallel to, for example, the weld zone 16.

Note that the melted portion 18 illustrated in Figure 4(a) extends from the back face 14c of the second steel material 14 toward the front face 12b of the first steel material 12, not reaching the front face 12b of the first steel material 12. As in the above embodiment, this melted portion 18 can be formed by, for example, heating the overlapping portion 12a and the overlapping portion 14a from a back face 14c side of the second steel material 14.

The melted portion 18 illustrated in Figure 4(b) runs through the overlapping portion 12a of the first steel material 12 and the overlapping portion 14a of the second steel material 14. This melted portion 18 can be formed by, for example, heating the overlapping portion 12a and the overlapping portion 14a from the back face 14c side of the second steel material 14 as in the above embodiment, or heating the overlapping portion 12a and the overlapping portion 14a from a front face 12b side of the first steel material 12.

The melted portion 18 illustrated in Figure 4(c) extends from the front face 12b of the first steel material 12 toward the back face 14c of the second steel material 14, not reaching the back face 14c of the second steel material 14. This melted portion 18 can be formed by, for example, heating the overlapping portion 12a and the overlapping portion 14a from the front face 12b side of the first steel material 12.

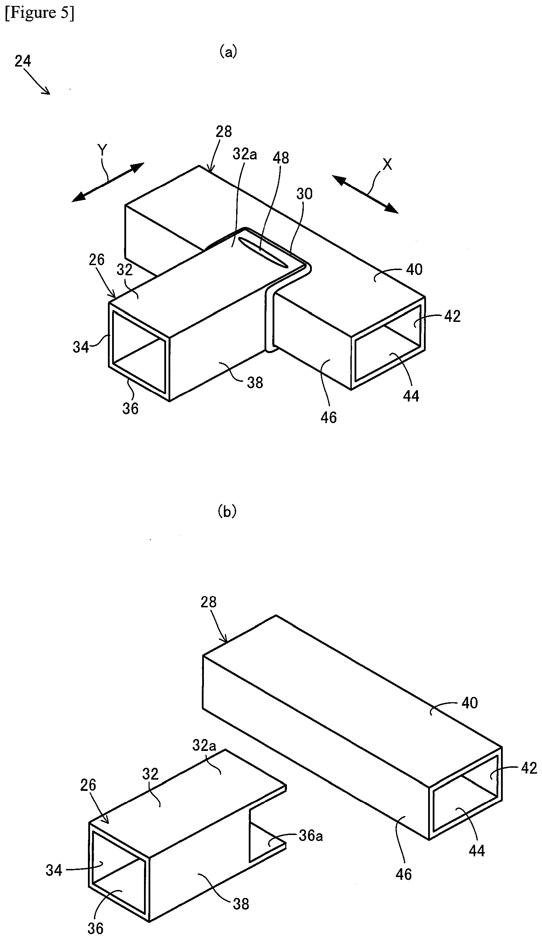

In the above embodiment, the description has been made to how to improve the fatigue strength of the weld joint 10 including the first steel material 12 and the second steel material 14 that are each in a rectangular shape in plan view. However, the shape of the weld joint is not limited to the above example, and the present invention is applicable to weld joints in various shapes. For example, the present invention may be applied to a weld joint 24 illustrated in Figure 5. The weld joint 24 will be described below briefly.

Figure 5(a) is a perspective view illustrating the weld joint 24, and Figure 5(b) is an exploded perspective view illustrating the weld joint 24. Referring to Figure 5(a), the weld joint 24 includes a first member 26, a second member 28, and a weld zone 30 connecting the first member 26 and the second member 28. The first member 26 and the second member 28 are each made of steel. In addition, the first member 26 and the second member 28 have a thickness of, for example, 3.3 mm or smaller.

Referring to Figures 5(a) and 5(b), the first member 26 has a square tube shape, including four plate-shaped portions 32, 34, 36, and 38. The plate-shaped portion 32 and the plate-shaped portion 36 are provided facing each other and being in parallel to each other. The plate-shaped portion 34 and the plate-shaped portion 38 are provided facing each other and being in parallel to each other. The plate-shaped portions 34 and 38 each connect the plate-shaped portion 32 and the plate-shaped portion 36. A portion 32a of the plate-shaped portion 32 and a portion 36a of the plate-shaped portion 36 protrude toward a second member 28 side from the plate-shaped portions 34 and 38, respectively.

The second member 28 has a square tube shape, including four plate-shaped portions 40, 42, 44, and 46. The plate-shaped portion 40 and the plate-shaped portion 44 are provided facing each other and being in parallel to each other. The plate-shaped portion 42 and the plate-shaped portion 46 are provided facing each other and being in parallel to each other. The plate-shaped portions 42 and 46 each connect the plate-shaped portion 40 and the plate-shaped portion 44.

At the time of welding the first member 26 and the second member 28 together, the second member 28 is inserted between the portion 32a of the plate-shaped portion 32 and the portion 36a of the plate-shaped portion 36. In the weld joint 24, the first member 26 and the second member 28 are welded together, with the portion 32a of the plate-shaped portion 32 and a portion of the plate-shaped portion 40 as overlapping portions overlapping with each other, and the portion 36a of the plate-shaped portion 36 and a portion of the plate-shaped portion 44 overlapping with each other as overlapping portions. The weld zone 30 is formed along an edge portion of the first member 26 on the second member 28 side.

In the present embodiment, the plate-shaped portion 32 and the plate-shaped portion 36 are each equivalent to the first steel material, and the plate-shaped portion 40 and the plate-shaped portion 44 are each equivalent to the second steel material. Referring to Figure 5(a), in the present embodiment, for example, the reference direction Y is defined with respect to the above extending direction X regarded as a direction in which the weld zone 30 extends along an edge portion of the plate-shaped portion 32 on the second member 28 side. With the reference direction Y defined in such a manner, as in the above embodiment, for example, a melted portion 48 is formed in the portion 32a of the plate-shaped portion 32 and a portion of the plate-shaped portion 40 overlapping with the above portion 32a. Similarly, the reference direction is defined with respect to the extending direction regarded as a direction in which the weld zone 30 extends along an edge portion of the plate-shaped portion 36 on the second member 28 side, although detailed description thereof will be omitted. With the reference direction defined in such a manner, as in the above embodiment, for example, a melted portion is formed in the portion 36a of the plate-shaped portion 36 and a portion of the plate-shaped portion 44 overlapping with the above portion 36a. As a result, also for the weld joint 24, its fatigue strength can be improved as with the weld joint 10 described above.

As seen from the above, in order to improve the fatigue strength of a lap-welded joint having a configuration in which plate-shaped portions of one member are welded to plate-shaped portions of the other member, the present invention can be made available by defining each of the plate-shaped portions of the one member as the first steel material and defining each of the plate-shaped portions of the other member as the second steel material.

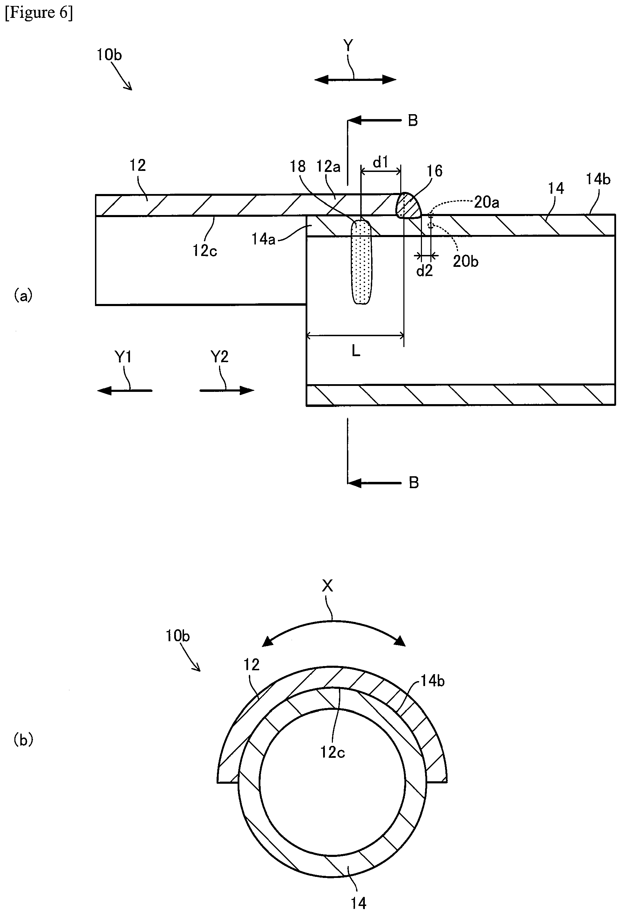

In the above embodiment, the description has been made to the case where the first steel material and the second steel material are each made of a steel sheet or a flat-shaped portion, but the shapes of the first steel material and the second steel material are not limited to the example described above. For example, the first steel material may have a front face and/or a back face in a curved shape, and the second steel material may have a front face and/or a back face in a curved surface. Specifically, for example, the present invention may be applied to a weld joint 10b illustrated in Figure 6.

Figure 6(a) is a longitudinal sectional view illustrating the weld joint 10b, and Figure 6(b) is a cross-sectional view taken along a B-B line of Figure 6(a). Referring to Figure 6(a), the weld joint 10b differs from the above weld joint 10 in that the first steel material 12 has a semicylindrical shape and in that the second steel material 14 has a cylindrical shape. In other words, in the present embodiment, the first steel material 12 includes the back face 12c in a curved-surface shape (semicylindrical shape), and the second steel material 14 includes a front face 14b in a curved-surface shape (cylindrical shape). Also in the present embodiment, as in the above embodiment, the first steel material 12 and the second steel material 14 each have a thickness of, for example, 3.3 mm or smaller.

In the weld joint 10b, with a portion of the back face 12c and a portion of the front face 14b facing each other, the first steel material 12 and the second steel material 14 are joined to each other with the weld zone 16. In the present embodiment, the weld zone 16 extends along an edge portion of the first steel material 12 in a circumferential direction of the second steel material 14 (a direction illustrated by an arrow X in Figure 6(b)). In addition, also in the present embodiment, the melted portion 18 is formed in the overlapping portion 14a to extend in parallel to the weld zone 16. In the present embodiment, the melted portion 18 is formed to extend in the circumferential direction X of the second steel material 14. Note that the melted portion 18 may be formed in the overlapping portion 12a as in the above embodiment.

Also in the weld joint 10b illustrated in Figure 6, the present invention can be made available by defining the reference direction Y, the first direction Y1, the second direction Y2, the position 20a, the position 20b, the distance d1, the distance d2, and the distance L, as in the above embodiment. Note that, the first steel material may have a cylindrical shape, and the second steel material may have a semicylindrical shape, although detailed description thereof will be omitted. In addition, the first steel material and the second steel material may both have semicylindrical shapes, and the first steel material and the second steel material may both have cylindrical shapes.

### <Simulation-Based Study 1>

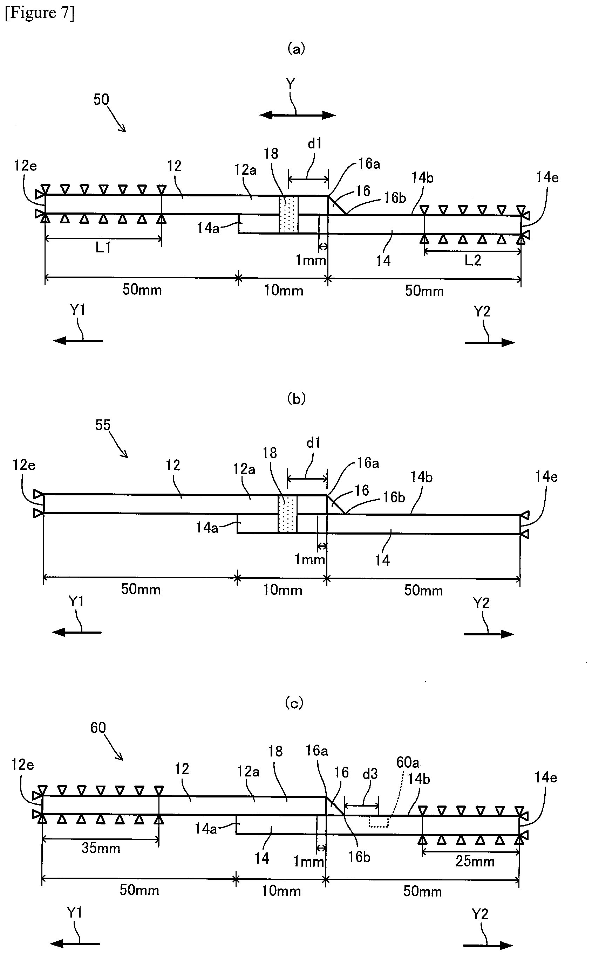

Description will be made below to advantageous effects of the present invention, with the results of a simulation conducted by an FE analysis using a computer. Figure 7(a) is a diagram illustrating an FE model 50 for a weld joint made according to the present invention (hereafter, referred to as an analysis model 50), Figure 7(b) is a diagram illustrating an FE model 55 for a weld joint according to a example (hereafter, referred to as an analysis model 55), and Figure 7(c) is a diagram illustrating an FE model 60 for a weld joint according to another comparative example (hereafter, referred to as an analysis model 60). Each of the analysis models was a two-dimensional FE model using plane strain elements, and the number of the elements was 1986. In addition, the analysis was conducted based on a linear kinematic hardening rule. The first steel material 12, the second steel material 14, and the weld zone 16 were made of SUS316L. Note that, in Figures 7(a), 7(b), and 7(c), and Figure 11 and Figure 14 to be described later, constraint points of the analysis models are illustrated in the form of triangle marks.

In all of the analysis models 50, 55, and 60, the thicknesses of the first steel material 12 and the second steel material 14 were set at 3.2 mm. A region in the first steel material 12 having a length of 1 mm in the first direction Y1 from the edge of the first steel material 12 on a weld zone 16 side was set to be coupled to the second steel material 14. In addition, the coefficient of static friction between the first steel material 12 and the second steel material 14 was set at 0.2.

In the simulation using the analysis model 50, a portion to be the melted portion 18 was heated from a normal temperature (20°C) to 1400°C or higher as shown in Table 1 below on the supposition that the melted portion 18 running through the first steel material 12 and the second steel material 14 is formed. In addition, as shown in Table 1 below, the distance d1 was set at 3 mm, 6 mm, and 8 mm. The width of the melted portion 18 in the reference direction Y was set at 2 mm. Thereafter, the weld joint was cooled down to the normal temperature (20°C), then the constraint on the weld joint at both end portions was removed, and a residual stress in the vicinity of the weld toe 16b was evaluated.

Note that, in the simulation using the analysis model 50, the weld joint was constrained during the heating and during the cooling as follows. At the end face 12e of the first steel material 12, the first steel material 12 was restrained from moving in the reference direction Y, and in a region having the length L1 in the second direction Y2 from the end face 12e, the first steel material 12 was restrained from moving in its sheet-thickness direction. At the end face 14e of the second steel material 14, the second steel material 14 was restrained from moving in the reference direction Y, and in a region having the length L2 in the first direction Y1 from the end face 14e, the second steel material 14 was restrained from moving in its sheet-thickness direction. As shown in Table 1 below, the length L1 was set at 0 mm, 5 mm, 10 mm, 15 mm, and 35 mm. Note that setting the length L1 at 0 mm means a case where only the end face 12e is the location at which the first steel material 12 is restrained from moving in its sheet-thickness direction. The length L2 was set at 0 mm, 5 mm, 10 mm, 15 mm, and 25 mm. Setting the length L2 at 0 mm means a case where only the end face 14e is the location at which the second steel material 14 is restrained from moving in its sheet-thickness direction.

**[Table 1]**

| TABLE 1 | | | | | | | |
|---|---|---|---|---|---|---|---|
| ANALYSIS NO. | MODEL IN USE (SIGN) | HEATING CONDITIONS | | | CONSTRAINT CONDITIONS | | REMARKS |
| | | HEATING TEMPERATURE (°C) | d1 (mm) | d3 (mm) | L1 (mm) | L2 (mm) | |
| 1 | 50 | >1400 | 3 | | 0 | 0 | CONSTRAINT IN SHEET-THICKNESS DIRECTION AT END FACES |
| 2 | 50 | >1400 | 3 | | 5 | 5 | |
| 3 | 50 | >1400 | 3 | | 10 | 10 | |
| 4 | 50 | >1400 | 3 | | 15 | 15 | |
| 5 | 50 | >1400 | 3 | | 35 | 25 | |
| 6 | 50 | >1400 | 6 | | 35 | 25 | |
| 7 | 50 | >1400 | 8 | | 35 | 25 | |
| 8 | 55 | >1400 | 3 | | | | NO CONSTRAINT IN SHEET-THICKNESS DIRECTION |
| 9 | 60 | *650* | | 3 | 35 | 25 | |
| 10 | 60 | 800 | | 3 | 35 | 25 | |
| 11 | 60 | 650 | | 11 | 35 | 25 | |
| 12 | 60 | 800 | | 11 | 35 | 25 | |

In the simulation using the analysis model 55, the analysis was conducted in the same heating conditions and the same cooling conditions as those for the simulation using the analysis model 50. Note that, as shown in Table 1 above, the distance d1 was set at 3 mm. The width of the melted portion 18 in the reference direction Y was set at 2 mm. In addition, during the heating and during the cooling, the first steel material 12 was restrained from moving in the reference direction Y at the end face 12e of the first steel material 12, and the second steel material 14 was restrained from moving in the reference direction Y at the end face 14e of the second steel material 14. The movement of the first steel material 12 in its sheet-thickness direction and the movement of the second steel material 14 in its sheet-thickness direction were not restrained.

In addition, in the simulation using the analysis model 60, a region 60a lying at a distance d3 from the weld toe 16b in the second direction Y2 was heated from the normal temperature (20°C) to a temperature at which the second steel material 14 is not melted. As shown in Table 1 above, the distance d3 was set at 3 mm and 11 mm. The temperature of the heating was set at 650°C and 800°C. Thereafter, the weld joint was cooled down to the normal temperature (20°C), then the constraint on the weld joint at both end portions was removed, and a residual stress in the vicinity of the weld toe 16b was evaluated. Note that, during the heating and during the cooling, at the end face 12e of the first steel material 12, the first steel material 12 was restrained from moving in the reference direction Y, and in a region having a length of 35 mm in the second direction Y2 from the end face 12e, the first steel material 12 was restrained from moving in its sheet-thickness direction. In addition, at the end face 14e of the second steel material 14, the second steel material 14 was restrained from moving in the reference direction Y, and in a region having the length of 25 mm in the first direction Y1 from the end face 14e, the second steel material 14 was restrained from moving in its sheet-thickness direction.

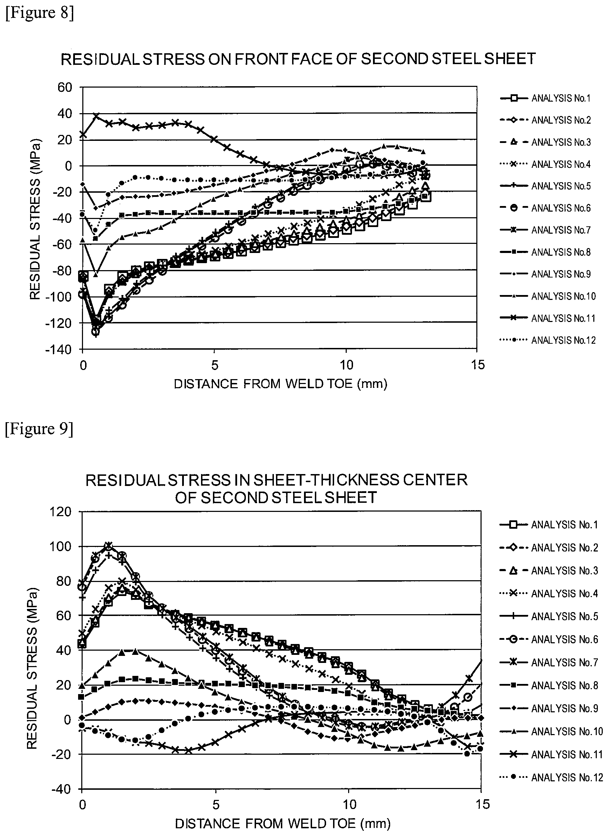

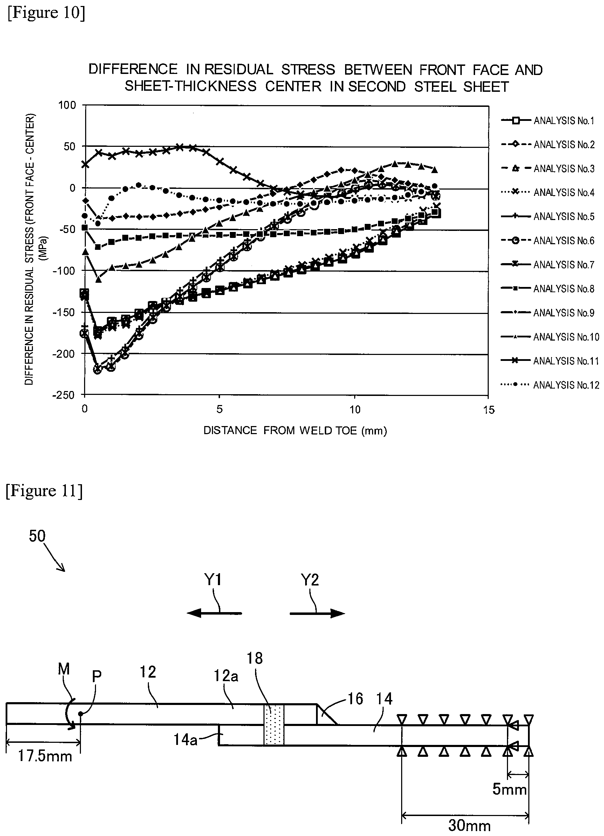

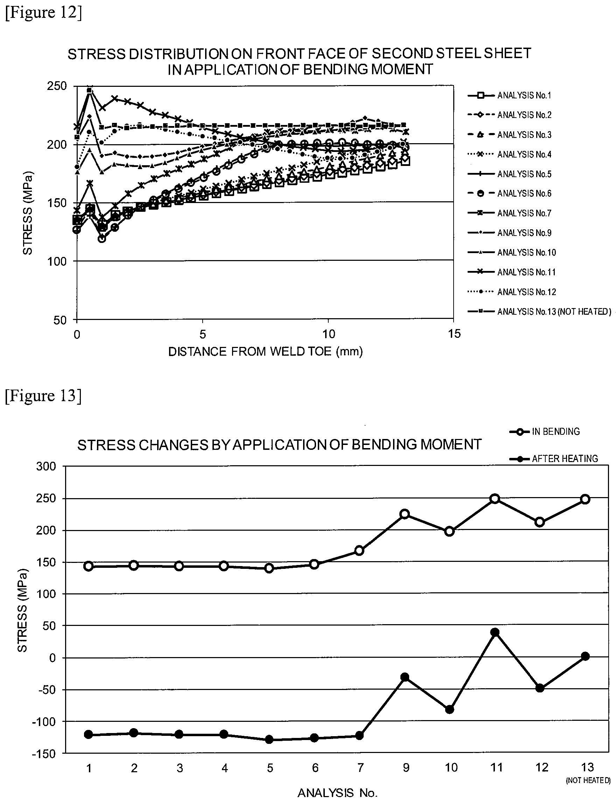

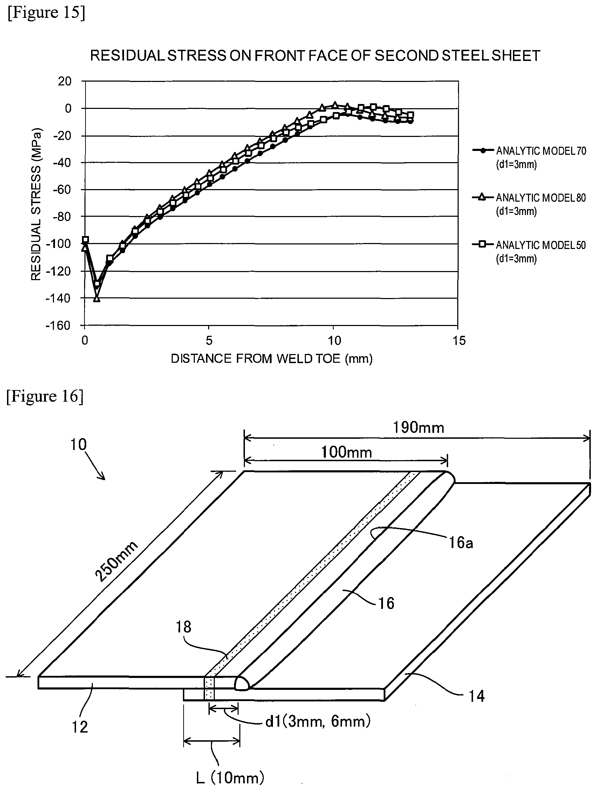

Figure 8 and Figure 9 illustrate residual stresses in the reference direction Y in the vicinity of the weld toe 16b. Figure 8 illustrates the residual stress on the front face 14b of the second steel material 14, and Figure 9 illustrates the residual stress in the sheet-thickness center of the second steel material 14. In Figure 8 and Figure 9, tensile residual stresses are indicated as positive values, and compressive residual stresses are indicated as negative values. The same holds true for Figure 12, Figure 13, and Figure 15 to be described later. In addition, Figure 10 illustrates values obtained by subtracting the residual stresses in the sheet-thickness center from the residual stresses on the front face 14b of the second steel material 14. Note that, in Figure 8 to Figure 10, the horizontal axis indicates a distance from the weld toe 16b in the second direction Y2. The same applies to Figure 12 and Figure 15 to be described later.

In addition, to the analysis model 50 after subjected to the heating and the cooling in the above manner (specifically, the analysis model 50 used for Analysis Nos. 1 to 7 shown in Table 1), a bending moment (0.4 N·m) was applied. Specifically, as illustrated in Figure 11, with the edge portion of the second steel material 14 on the second direction Y2 side constrained, the bending moment was applied to a predetermined position P of the first steel material 12. The bending moment was similarly applied to the analysis model 60 after subjected to the heating and the cooling, although the illustration thereof will be omitted. Figure 12 illustrates stress distributions on the front face 14b of the second steel material 14 when the bending moment is applied to the analysis models 50 and 60. Note that, for comparison, Figure 12 illustrates a stress distribution on the front face 14b of the second steel material 14 when the bending moment is applied to an analysis model before the heating (i.e., before the melted portion 18 is formed), as Analysis No. 13. In addition, Figure 13 illustrates changes in stress before and after the application of the bending moment. Note that Figure 13 illustrates stresses at a position on the front face 14b of the second steel material 14 at a distance of 0.5 mm from the weld toe 16b in the second direction Y2 (a position where change amounts of the stresses were maximized).

As seen from Figure 8, the analysis model 50 of the weld joint made according to the present invention (Analysis Nos. 1 to 7) enabled sufficiently large compressive residual stresses to be occurred in the vicinity of the weld toe 16b on the front face 14b of the second steel material 14, as compared with the analysis models 55 and 60 of the weld joints according to the comparative examples (Analysis Nos. 8 to 12). In addition, as seen from Figure 8 and Figure 10, in the vicinity of the weld toe 16b, the analysis model 50 (Analysis Nos. 1 to 7) enabled the residual stress on the front face 14b to be set at a more sufficiently compressive value than the residual stress in the sheet-thickness center, as compared with the analysis models 55 and 60 (Analysis Nos. 8 to 12). In addition, from the comparison between the result of Analysis No. 1 and the results of Analysis Nos. 2 to 7, it was found that, in the vicinity of the weld toe 16b, the residual stress on the front face 14b could be set at a more sufficiently compressive value than the residual stress in the sheet-thickness center, by restraining the first steel material 12 from moving in the first direction Y1 and from moving in its sheet-thickness direction at least at the end face 12e (see Figure 7) and by restraining the second steel material 14 from moving in the second direction Y2 and from moving in its sheet-thickness direction at least at the end face 14e (see Figure 7).

Furthermore, as seen from Figure 12 and Figure 13, when the bending moment was applied, the analysis model 50 (Analysis Nos. 1 to 7) could sufficiently reduce the tensile stress in the vicinity of the weld toe 16b on the front face 14b, as compared with the analysis model 60 (Analysis Nos. 9 to 12) and the analysis model before the heating (Analysis No. 13). As seen from the above, with the weld joint made according to the present invention, it is possible to inhibit a large tensile stress from occurring in the vicinity of the weld toe 16b on the front face 14b of the second steel material 14. Consequently, it is understood that, according to the present invention, it is possible to sufficiently improve the fatigue strength of a lap-welded joint. Note that, from the results illustrated in Figure 12, it is understood that the tensile stress occurring in the application of the bending moment can be sufficiently reduced by making the distance d1 shorter than 8 mm. In addition, it is understood that the tensile stress occurring in the application of the bending moment can be further sufficiently reduced by making the distance d1 shorter than 6 mm.

### <Simulation-Based Study 2>

In the above simulation, the analyses were conducted assuming that the melted portion 18 was formed running through the first steel material 12 and the second steel material 14, and in contrast, in this simulation, the residual stress in the vicinity of the weld toe 16b was evaluated with different formation regions of the melted portion 18.

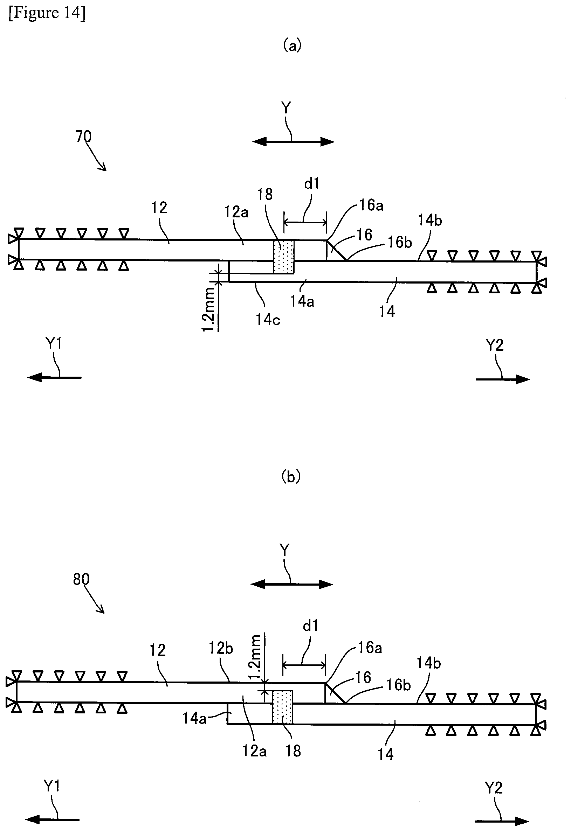

Referring to Figures 14(a) and 14(b), this simulation was executed by using an analysis model 70 in which the melted portion 18 did not reach the back face 14c of the second steel material 14, and an analysis model 80 in which the melted portion 18 did not reach the front face 12b of the first steel material 12. The distance d1 was set at 3 mm. Note that the analysis models 70 and 80 were created in the same conditions as those for the above analysis model 50 except the melted portion 18. Constraint conditions were the same as the constraint conditions for Analysis No. 5 shown in Table 1 (L1 = 35 mm, L2 = 25 mm).

In the same conditions as the conditions for the above analysis model 50, the analysis models 70 and 80 were heated and cooled, and the residual stress on the front face 14b of the second steel material 14 was evaluated. Figure 15 illustrates the results of the evaluation. Note that, for comparison, the analysis result of Analysis No. 5 of the analysis model 50 (d1 = 3 mm) is illustrated in Figure 15.

As seen from Figure 15, also the case where the melted portion 18 did not run through the first steel material 12 and the second steel material 14 provided the same advantageous effects as those in the case where the melted portion 18 was formed running through the first steel material 12 and the second steel material 14.

### EXAMPLES

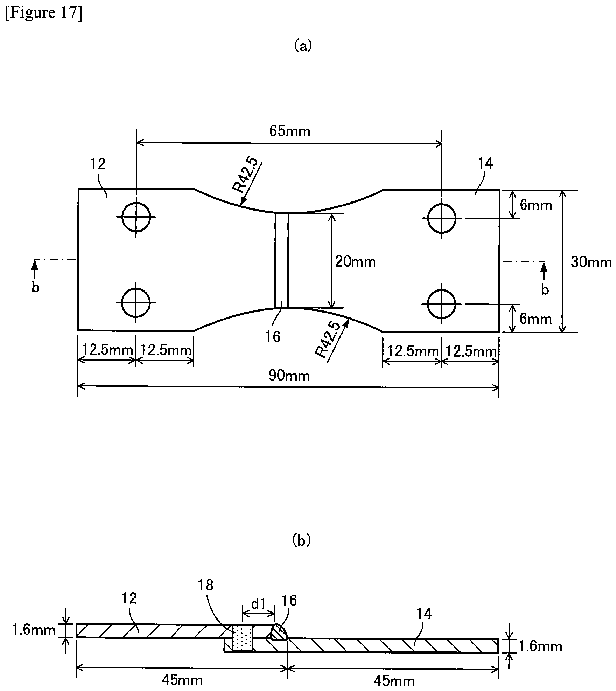

By the improving method according to the present embodiment described with reference to Figure 3, a plurality of weld joints 10 each having a shape and dimensions illustrated in Figure 16 were fabricated. The thicknesses of the first steel material 12 and the second steel material 14 were set at 1.6 mm, the above distance L was set at 10 mm, and the above distance d1 was set at 3 mm and 6 mm. Hereafter, weld joints 10 having the distance d1 set at 3 mm will be referred to as weld joints 10 of an Example 1, and weld joints 10 having a distance d1 of 6 mm will be referred to as weld joints 10 of an Example 2. Note that the first steel material 12 and the second steel material 14 were joined to each other by arc welding. In addition, the melted portion 18 was formed across the first steel material 12 and the second steel material 14 by a laser beam. From each of the weld joints 10 of the Example 1 and the Example 2, two fatigue test specimens having a shape and dimensions illustrated in Figure 17 were taken. Note that, in Figure 17, Figure 17(a) is a plan view of the fatigue test specimen, and Figure 17(b) is a cross-sectional view taken along a b-b line of Figure 17(a). In addition, Figure 17(a) does not illustrate the melted portion 18 to avoid complicating the drawing. In addition, a weld joint having the same configuration as that of the weld joints of the Example 1 and the Example 2 except that the melted portion 18 was not included (heating treatment and cooling treatment were not performed) was fabricated as a weld joint of the comparative example. From the fabricated weld joint of the comparative example, three fatigue test specimens having a shape and dimensions illustrated in Figure 17 were taken.

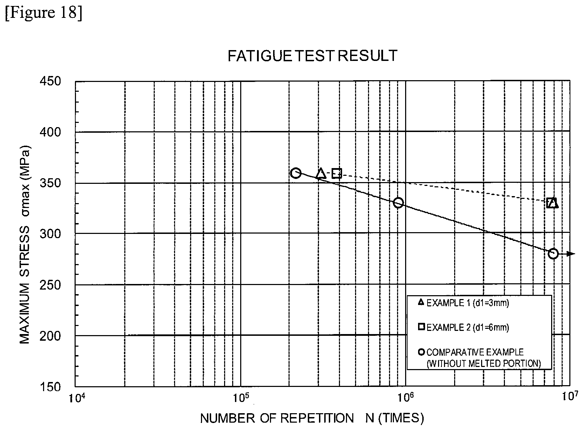

Using the above specimens taken from the weld joints 10 of the Example 1 and the Example 2 and the weld joint of the comparative example, a bending fatigue test was conducted. The results of the bending fatigue test are shown in Figure 18. As illustrated in Figure 18, the weld joints 10 of Examples 1 and 2 to which the present invention was applied had a sufficiently improved fatigue life as compared with the weld joint of the comparative example to which the present invention was not applied. Specifically, for example, comparing fatigue lives with a maximum stress of 330 MPa, the fatigue lives of the weld joints 10 of Examples 1 and 2 were as long as about 8.4 to 8.7 times the fatigue life of the weld joint of the comparative example. In addition, for example, comparing fatigue lives with a maximum stress of 360 MPa, the fatigue lives of the weld joints 10 of Examples 1 and 2 were as long as about 1.4 to 1.8 times the fatigue life of the weld joint of the comparative example. From the above, it is understood that the present invention enables the fatigue strength of a lap-welded joint to be sufficiently improved.

### INDUSTRIAL APPLICABILITY

According to the present invention, it is possible to improve the fatigue strength of a lap-welded joint sufficiently. Consequently, the present invention is suitably available to improve the fatigue strength of a lap-welded joint used as a constituting member of an automobile body or the like.

### REFERENCE SIGNS LIST

10, 10a, 10b, 24 weld joint
12 first steel material
14 second steel material
16, 30 weld zone
18, 48 melted portion
26 first member
28 second member
32, 34, 36, 38, 40, 42, 44, 46 plate-shaped portion

## Claims

1. A method for improving a fatigue strength of a lap-welded joint (10, 10a, 10b, 24) in which a portion of a first steel material (12) having a predetermined thickness and a portion of a second steel material (14) having a predetermined thickness overlap with each other as overlapping portions (12a, 14a), and an edge portion of the first steel material (12) is welded to a front face (14b) of the second steel material (14) with a weld zone (16, 30) extending along the edge portion, **characterised in that**:
when a direction perpendicular to an extending direction (X) of the weld zone (16, 30) and parallel to the front face (14b) of the second steel material (14) is defined as a reference direction (Y), and while the lap-welded joint (10, 10a, 10b, 24) is restrained from moving in the reference direction (Y), the first steel material (12) is restrained from moving in a thickness direction of the first steel material (12), and the second steel material (14) is restrained from moving in a thickness direction of the second steel material (14), a sub-portion of the overlapping portion (14a) of the second steel material (14) is heated such that a melted portion (18, 48) is formed in the sub-portion of the overlapping portion (14a) of the second steel material (14),
when forming the melted portion (18, 48) the first steel material (12) is restrained from moving in the reference direction (Y) at an end face (12e) of the first steel material (12) opposite to the second steel material (14) and the second steel material (14) is restrained from moving in the reference direction (Y) at an end face (14e) of the second steel material (14) opposite to the first steel material (12).

2. The method for improving a fatigue strength of a lap-welded joint (10, 10a, 10b, 24) according to claim 1, wherein a sub-portion of the overlapping portion (12a) of the first steel material (12) and a sub-portion of the overlapping portion (14a) of the second steel material (14) are heated such that the melted portion (18, 48) is formed in the sub-portion of the overlapping portion (12a) of the first steel material (12) and the sub-portion of the overlapping portion (14a) of the second steel material (14).

3. The method for improving a fatigue strength of a lap-welded joint (10, 10a, 10b, 24) according to claim 1 or 2, wherein the melted portion (18, 48) is formed to extend in parallel to the weld zone (16, 30) extending along the edge portion of the first steel material (12).

4. The method for improving a fatigue strength of a lap-welded joint (10, 10a, 10b, 24) according to any one of claims 1 to 3, wherein a position heated in the overlapping portion (14a) of the second steel material (14) is at a distance of 2 mm or longer to 10 mm or shorter in the reference direction (Y) from the weld zone (16, 30) extending along the edge portion.

5. The method for improving a fatigue strength of a lap-welded joint (10, 10a, 10b, 24) according to any one of claims 1 to 4, wherein the sub-portion of the overlapping portion (14a) of the second steel material (14) is heated by a laser beam, tungsten inert gas, or an electron beam.

6. The method for improving a fatigue strength of a lap-welded joint (10, 10a, 10b, 24) according to any one of claims 1 to 5, wherein the melted portion (18, 48) is formed at a position that is at a distance from the weld zone (16, 30) in the reference direction (Y).

7. A manufacturing method for a lap-welded joint (10, 10a, 10b, 24) comprising a welding step of welding a first steel material (12) and a second steel material (14) together to obtain a joined body, and a heating step of heating the joined body, wherein
the welding step includes a step of, in a state where a portion of the first steel material (12) and a portion of the second steel material (14) overlap with each other as overlapping portions (12a, 14a), welding an edge portion of the first steel material (12) and a front face (14b) of the second steel material (14) together such that a weld zone (16, 30) is formed along the edge portion, and **characterised in that**:
when a direction perpendicular to an extending direction (X) of the weld zone (16, 30) and parallel to the front face (14b) of the second steel material (14) is defined as a reference direction (Y), the heating step includes a step of, while the joined body is restrained from moving in the reference direction (Y), the first steel material (12) is restrained from moving in a thickness direction of the first steel material (12), and the second steel material (14) is restrained from moving in a thickness direction of the second steel material (14), heating a sub-portion of the overlapping portion (14a) of the second steel material (14) such that a melted portion (18, 48) is formed in the sub-portion of the overlapping portion (14a) of the second steel material (14),
when forming the melted portion (18, 48) the first steel material (12) is restrained from moving in the reference direction (Y) at an end face (12e) of the first steel material (12) opposite to the second steel material (14) and the second steel material (14) is restrained from moving in the reference direction (Y) at an end face (14e) of the second steel material (14) opposite to the first steel material (12).

8. The manufacturing method for a lap-welded joint (10, 10a, 10b, 24) according to claim 7, wherein the heating step includes a step of heating a sub-portion of the overlapping portion (12a) of the first steel material (12) and a sub-portion of the overlapping portion (14a) of the second steel material (14) such that the melted portion (18, 48) is formed in the sub-portion of the overlapping portion (12a) of the first steel material (12) and the sub-portion of the overlapping portion (14a) of the second steel material (14).

9. The manufacturing method for a lap-welded joint (10, 10a, 10b, 24) according to claim 7 or 8, wherein, in the heating step, the melted portion (18, 48) is formed to extend in parallel to the weld zone (16, 30) extending along the edge portion of the first steel material (12).

10. The manufacturing method for a lap-welded joint (10, 10a, 10b, 24) according to any one of claims 7 to 9, wherein a position heated in the overlapping portion (14a) of the second steel material (14) in the heating step is at a distance of 2 mm or longer to 10 mm or shorter in the reference direction (Y) from the weld zone (16, 30) extending along the edge portion.

11. The manufacturing method for a lap-welded joint (10, 10a, 10b, 24) according to any one of claims 7 to 10, wherein, in the heating step, the sub-portion of the overlapping portion (14a) of the second steel material (14) is heated by a laser beam, tungsten inert gas, or an electron beam.

12. The manufacturing method for a lap-welded joint (10, 10a, 10b, 24) according to any one of claims 7 to 11, wherein, in the heating step, the melted portion (18, 48) is formed at a position that is at a distance from the weld zone (16, 30) in the reference direction (Y).

## Patentansprüche

1. Verfahren zur Verbesserung der Ermüdungsfestigkeit einer Überlappungsschweißverbindung (10, 10a, 10b, 24), bei dem ein Abschnitt eines ersten Stahlmaterials (12) mit einer vorbestimmten Dicke und ein Abschnitt eines zweiten Stahlmaterials (14) mit einer vorbestimmten Dicke einander als Überlappungsabschnitte (12a, 14a) überlappen, und ein Kantenabschnitt des ersten Stahlmaterials (12) mit einer Stirnfläche (14b) des zweiten Stahlmaterials (14) mit einer Schweißzone (16, 30) verschweißt ist, die sich entlang des Kantenabschnitts erstreckt, **dadurch gekennzeichnet, dass**:
wenn eine Richtung senkrecht zu einer Erstreckungsrichtung (X) der Schweißzone (16, 30) und parallel zur Stirnfläche (14b) des zweiten Stahlmaterials (14) als Bezugsrichtung (Y) definiert ist, und während die Überlappungsschweißverbindung (10, 10a, 10b, 24) an einer Bewegung in der Bezugsrichtung (Y) gehindert wird, das erste Stahlmaterial (12) an einer Bewegung in einer Dickenrichtung des ersten Stahlmaterials (12) gehindert wird, und das zweite Stahlmaterial (14) an einer Bewegung in einer Dickenrichtung des zweiten Stahlmaterials (14) gehindert wird, ein Teilabschnitt des Überlappungsabschnitts (14a) des zweiten Stahlmaterials (14) erwärmt wird, so dass ein geschmolzener Abschnitt (18, 48) in dem Teilabschnitt des Überlappungsabschnitts (14a) des zweiten Stahlmaterials (14) gebildet wird,
beim Bilden des geschmolzenen Abschnitts (18, 48) das erste Stahlmaterial (12) an einer dem zweiten Stahlmaterial (14) gegenüberliegenden Endfläche (12e) des ersten Stahlmaterials (12) an einer Bewegung in der Bezugsrichtung (Y) gehindert wird und das zweite Stahlmaterial (14) an einer dem ersten Stahlmaterial (12) gegenüberliegenden Endfläche (14e) des zweiten Stahlmaterials (14) an einer Bewegung in der Bezugsrichtung (Y) gehindert wird.

2. Verfahren zur Verbesserung der Ermüdungsfestigkeit einer Überlappungsschweißverbindung (10, 10a, 10b, 24) nach Anspruch 1, wobei ein Teilabschnitt des Überlappungsabschnitts (12a) des ersten Stahlmaterials (12) und ein Teilabschnitt des Überlappungsabschnitts (14a) des zweiten Stahlmaterials (14) erwärmt werden, so dass der geschmolzene Abschnitt (18, 48) in dem Teilabschnitt des Überlappungsabschnitts (12a) des ersten Stahlmaterials (12) und in dem Teilabschnitt des Überlappungsabschnitts (14a) des zweiten Stahlmaterials (14) gebildet wird.

3. Verfahren zur Verbesserung der Ermüdungsfestigkeit einer Überlappungsschweißverbindung (10, 10a, 10b, 24) nach Anspruch 1 oder 2, wobei der geschmolzene Abschnitt (18, 48) so gebildet ist, dass er sich parallel zu der Schweißzone (16, 30) erstreckt, die sich entlang des Kantenabschnitts des ersten Stahlmaterials (12) erstreckt.

4. Verfahren zur Verbesserung der Ermüdungsfestigkeit einer Überlappungsschweißverbindung (10, 10a, 10b, 24) nach einem der Ansprüche 1 bis 3, wobei eine im Überlappungsabschnitt (14a) des zweiten Stahlmaterials (14) erwärmte Stelle in der Bezugsrichtung (Y) einen Abstand von 2 mm oder mehr bis 10 mm oder weniger von der sich entlang des Kantenabschnitts erstreckenden Schweißzone (16, 30) aufweist.

5. Verfahren zur Verbesserung der Ermüdungsfestigkeit einer Überlappungsschweißverbindung (10, 10a, 10b, 24) nach einem der Ansprüche 1 bis 4, wobei der Teilabschnitt des Überlappungsabschnitts (14a) des zweiten Stahlmaterials (14) durch einen Laserstrahl, Wolfram-Inertgas oder einen Elektronenstrahl erwärmt wird.

6. Verfahren zur Verbesserung der Ermüdungsfestigkeit einer Überlappungsschweißverbindung (10, 10a, 10b, 24) nach einem der Ansprüche 1 bis 5, wobei der geschmolzene Abschnitt (18, 48) an einer Stelle gebildet wird, die in der Bezugsrichtung (Y) von der Schweißzone (16, 30) beabstandet ist.

7. Herstellungsverfahren für eine Überlappungsschweißverbindung (10, 10a, 10b, 24), das einen Schweißschritt des Zusammenschweißens eines ersten Stahlmaterials (12) und eines zweiten Stahlmaterials (14), um einen verbundenen Körper zu erhalten, und einen Erwärmungsschritt des Erwärmens des verbundenen Körpers umfasst, wobei
der Schweißschritt folgenden Schritt umfasst: in einem Zustand, in dem ein Abschnitt des ersten Stahlmaterials (12) und ein Abschnitt des zweiten Stahlmaterials (14) einander als Überlappungsabschnitte (12a, 14a) überlappen, Zusammenschweißen eines Kantenabschnitts des ersten Stahlmaterials (12) und einer Stirnfläche (14b) des zweiten Stahlmaterials (14), so dass eine Schweißzone (16, 30) entlang des Kantenabschnitts gebildet wird, und **dadurch gekennzeichnet, dass**:
wenn eine Richtung senkrecht zu einer Erstreckungsrichtung (X) der Schweißzone (16, 30) und parallel zur Stirnfläche (14b) des zweiten Stahlmaterials (14) als Bezugsrichtung (Y) definiert ist, der Erwärmungsschritt folgenden Schritt umfasst: während der verbundene Körper an einer Bewegung in der Bezugsrichtung (Y) gehindert wird, Hindern des ersten Stahlmaterials (12) an einer Bewegung in einer Dickenrichtung des ersten Stahlmaterials (12) und des zweiten Stahlmaterials (14) an einer Bewegung in einer Dickenrichtung des zweiten Stahlmaterials (14), Erwärmen eines Teilabschnitts des Überlappungsabschnitts (14a) des zweiten Stahlmaterials (14), so dass ein geschmolzener Abschnitt (18, 48) in dem Teilabschnitt des Überlappungsabschnitts (14a) des zweiten Stahlmaterials (14) gebildet wird,
beim Bilden des geschmolzenen Abschnitts (18, 48) das erste Stahlmaterial (12) an einer dem zweiten Stahlmaterial (14) gegenüberliegenden Endfläche (12e) des ersten Stahlmaterials (12) an einer Bewegung in der Bezugsrichtung (Y) gehindert wird und das zweite Stahlmaterial (14) an einer dem ersten Stahlmaterial (12) gegenüberliegenden Endfläche (14e) des zweiten Stahlmaterials (14) an einer Bewegung in der Bezugsrichtung (Y) gehindert wird.

8. Herstellungsverfahren für eine Überlappungsschweißverbindung (10, 10a, 10b, 24) nach Anspruch 7, wobei der Erwärmungsschritt einen Schritt des Erwärmens eines Teilabschnitts des Überlappungsabschnitts (12a) des ersten Stahlmaterials (12) und eines Teilabschnitts des Überlappungsabschnitts (14a) des zweiten Stahlmaterials (14) umfasst, so dass der geschmolzene Abschnitt (18, 48) in dem Teilabschnitt des Überlappungsabschnitts (12a) des ersten Stahlmaterials (12) und in dem Teilabschnitt des Überlappungsabschnitts (14a) des zweiten Stahlmaterials (14) gebildet wird.

9. Herstellungsverfahren für eine Überlappungsschweißverbindung (10, 10a, 10b, 24) nach Anspruch 7 oder 8, wobei bei dem Erwärmungsschritt der geschmolzene Abschnitt (18, 48) so gebildet ist, dass er sich parallel zu der Schweißzone (16, 30) erstreckt, die sich entlang des Kantenabschnitts des ersten Stahlmaterials (12) erstreckt.

10. Herstellungsverfahren für eine Überlappungsschweißverbindung (10, 10a, 10b, 24) nach einem der Ansprüche 7 oder 9, wobei eine bei dem Erwärmungsschritt im Überlappungsabschnitt (14a) des zweiten Stahlmaterials (14) erwärmte Stelle in der Bezugsrichtung (Y) einen Abstand von 2 mm oder mehr bis 10 mm oder weniger von der sich entlang des Kantenabschnitts erstreckenden Schweißzone (16, 30) aufweist.

11. Herstellungsverfahren für eine Überlappungsschweißverbindung (10, 10a, 10b, 24) nach einem der Ansprüche 7 oder 10, wobei bei dem Erwärmungsschritt der Teilabschnitt des Überlappungsabschnitts (14a) des zweiten Stahlmaterials (14) durch einen Laserstrahl, Wolfram-Inertgas oder einen Elektronenstrahl erwärmt wird.

12. Herstellungsverfahren für eine Überlappungsschweißverbindung (10, 10a, 10b, 24) nach einem der Ansprüche 7 oder 11, wobei bei dem Erwärmungsschritt der geschmolzene Abschnitt (18, 48) an einer Stelle gebildet wird, die in der Bezugsrichtung (Y) von der Schweißzone (16, 30) beabstandet ist.

## Revendications

1. Procédé pour améliorer la résistance à la fatigue d'un joint soudé par recouvrement (10, 10a, 10b, 24) dans lequel une partie d'un premier matériau en acier (12) ayant une épaisseur prédéterminée et une partie d'un second matériau en acier (14) ayant une épaisseur prédéterminée se chevauchant en tant que parties chevauchantes (12a, 14a), et une partie de bord du premier matériau en acier (12) est soudée à une face avant (14b) du second matériau en acier (14) avec une zone de soudure (16, 30) s'étendant le long de la partie de bord, **caractérisé en ce que** :
lorsqu'une direction perpendiculaire à une direction d'extension (X) de la zone de soudure (16, 30) et parallèle à la face avant (14b) du deuxième matériau en acier (14) est définie comme une direction de référence (Y), et pendant que le joint soudé par recouvrement (10, 10a, 10b, 24) est empêché de se déplacer dans la direction de référence (Y), le premier matériau en acier (12) est retenu de se déplacer dans une direction d'épaisseur du premier matériau en acier (12), et le second matériau en acier (14) est empêché de se déplacer dans une direction de l'épaisseur du deuxième matériau en acier (14), une sous-partie de la partie chevauchante (14a) du deuxième matériau en acier (14) est chauffée de telle sorte qu'une partie fondue (18, 48) est formée dans la sous-partie de la partie chevauchante (14a) du deuxième matériau en acier (14),
lors de la formation de la partie fondue (18, 48), le premier matériau en acier (12) est empêché de se déplacer dans la direction de référence (Y) au niveau d'une face d'extrémité (12e) du premier matériau en acier (12) à l'opposé du second matériau en acier (14) et le second matériau en acier (14) est empêché de se déplacer dans la direction de référence (Y) au niveau d'une face d'extrémité (14e) du second matériau en acier (14) à l'opposé du premier matériau en acier (12).

2. Procédé pour améliorer une résistance à la fatigue d'un joint soudé par recouvrement (10, 10a, 10b, 24) selon la revendication 1, dans lequel une sous-partie de la partie chevauchante (12a) du premier matériau en acier (12) et une sous-partie de la partie chevauchante (14a) du second matériau en acier (14) sont chauffées de telle sorte que la partie fondue (18, 48) est formée dans la sous-partie de la partie chevauchante (12a) du premier matériau en acier (12) et la sous-partie de la partie chevauchante (14a) du second matériau en acier (14).

3. Procédé pour améliorer une résistance à la fatigue d'un joint soudé par recouvrement (10, 10a, 10b, 24) selon la revendication 1 ou 2, dans lequel la partie fondue (18, 48) est formée pour s'étendre parallèlement à la zone de soudure (16, 30) s'étendant le long de la partie de bord du premier matériau en acier (12).

4. Procédé d'amélioration d'une résistance à la fatigue d'un joint soudé par recouvrement (10, 10a, 10b, 24) selon l'une quelconque des revendications 1 à 3, dans lequel une position chauffée dans la partie chevauchante (14a) du second matériau en acier (14) est à une distance de 2 mm ou plus à 10 mm ou moins dans la direction de référence (Y) de la zone de soudure (16, 30) s'étendant le long de la partie de bord.

5. Procédé pour améliorer une résistance à la fatigue d'un joint soudé par recouvrement (10, 10a, 10b, 24) selon l'une quelconque des revendications 1 à 4, dans lequel la sous-partie de la partie chevauchante (14a) du second matériau en acier (14) est chauffée par un faisceau laser, un gaz inerte au tungstène ou un faisceau d'électrons.

6. Procédé pour améliorer une résistance à la fatigue d'un joint soudé par recouvrement (10, 10a, 10b, 24) selon l'une quelconque des revendications 1 à 5, dans lequel la partie fondue (18, 48) est formée à une position qui est à une certaine distance de la zone de soudure (16, 30) dans la direction de référence (Y).

7. Procédé de fabrication d'un joint soudé par recouvrement (10, 10a, 10b, 24) comprenant une étape de soudage consistant à souder un premier matériau en acier (12) et un second matériau en acier (14) ensemble pour obtenir un corps joint, et une étape de chauffage consistant à chauffer le corps joint,
dans lequel l'étape de soudage comprend une étape consistant à, dans un état où une partie du premier matériau en acier (12) et une partie du second matériau en acier (14) se chevauchent en tant que parties chevauchantes (12a, 14a), souder ensemble une partie de bord du premier matériau en acier (12) et une face avant (14b) du second matériau en acier (14) de telle sorte qu'une zone de soudure (16, 30) soit formée le long de la partie de bord, et **caractérisée en ce que** :
lorsqu'une direction perpendiculaire à une direction d'extension (X) de la zone de soudure (16, 30) et parallèle à la face avant (14b) du second matériau en acier (14) est définie comme une direction de référence (Y), l'étape de chauffage comprend une étape de, pendant que le corps joint est empêché de se déplacer dans la direction de référence (Y), le premier matériau d'acier (12) est empêché de se déplacer dans une direction d'épaisseur du premier matériau d'acier (12), et le second matériau d'acier (14) est empêché de se déplacer dans une direction d'épaisseur du second matériau d'acier (14), chauffage d'une sous-partie de la partie chevauchante (14a) du second matériau en acier (14) telle qu'une partie fondue (18, 48) est formée dans la sous-partie de la partie chevauchante (14a) du second matériau en acier (14),
lors de la formation de la partie fondue (18, 48), le premier matériau en acier (12) est empêché de se déplacer dans la direction de référence (Y) au niveau d'une face d'extrémité (12e) du premier matériau en acier (12) opposée au second matériau en acier (14) et le second matériau en acier (14) est empêché de se déplacer dans la direction de référence (Y) au niveau d'une face d'extrémité (14e) du second matériau en acier (14) opposée au premier matériau en acier (12).

8. Procédé de fabrication d'un joint soudé par recouvrement (10, 10a, 10b, 24) selon la revendication 7, dans lequel l'étape de chauffage comprend une étape de chauffage d'une sous-partie de la partie chevauchante (12a) du premier matériau en acier (12) et d'une sous-partie de la partie chevauchante (14a) du second matériau en acier (14) de telle sorte que la partie fondue (18, 48) est formée dans la sous-partie de la partie chevauchante (12a) du premier matériau en acier (12) et la sous-partie de la partie chevauchante (14a) du second matériau en acier (14).

9. Procédé de fabrication d'un joint soudé par recouvrement (10, 10a, 10b, 24) selon la revendication 7 ou 8, dans lequel, lors de l'étape de chauffage, la partie fondue (18, 48) est formée pour s'étendre parallèlement à la zone de soudure (16, 30) s'étendant le long de la partie de bord du premier matériau en acier (12).

10. Procédé de fabrication d'un joint soudé par recouvrement (10, 10a, 10b, 24) selon l'une quelconque des revendications 7 à 9, dans lequel une position chauffée dans la partie chevauchante (14a) du second matériau en acier (14) lors de l'étape de chauffage est à une distance de 2 mm ou plus à 10 mm ou moins dans la direction de référence (Y) de la zone de soudure (16, 30) s'étendant le long de la partie de bord.

11. Procédé de fabrication d'un joint soudé par recouvrement (10, 10a, 10b, 24) selon l'une quelconque des revendications 7 à 10, dans lequel, lors de l'étape de chauffage, la sous-partie de la partie chevauchante (14a) du second matériau en acier (14) est chauffée par un faisceau laser, un gaz inerte au tungstène ou un faisceau d'électrons.

12. Procédé de fabrication d'un joint soudé par recouvrement (10, 10a, 10b, 24) selon l'une quelconque des revendications 7 à 11, dans lequel, lors de l'étape de chauffage, la partie fondue (18, 48) est formée à un emplacement qui est à une certaine distance de la zone de soudure (16, 30) dans la direction de référence (Y).
